## Europäisches Patentamt

## European Patent Office

## Office européen des brevets

(11) Veröffentlichungsnummer: **0 177 769 B1**

## (12) EUROPÄISCHE PATENTSCHRIFT

(45) Veröffentlichungstag der Patentschrift:
06.09.89

(51) Int. Cl.⁴: **C 01 F 11/02**

(21) Anmeldenummer: **85111281.3**

(22) Anmeldetag: **06.09.85**

(54) Verfahren zur Herstellung von Kalziumhydroxid.

(30) Priorität: **11.09.84 DE 3433228**

(43) Veröffentlichungstag der Anmeldung:
**16.04.86 Patentblatt 86/16**

(45) Bekanntmachung des Hinweises auf die Patenterteilung:
**06.09.89 Patentblatt 89/36**

(84) Benannte Vertragsstaaten:
**AT BE FR GB IT LU NL**

(56) Entgegenhaltungen:
US-A- 2 230 761
US-A- 2 784 062
US-A- 4 464 353

ZEMENT-KALK-GIPS, Band 37, Nr. 10, Oktober 1984,
Seiten 530-533, Wiesbaden-Biebrich; F. SCHMITZ et al.:
"Trockengelöschtes Kalkhydrat mit grosser Oberfläche
- Ein wirksames Reagenz zur Bindung saurer
Abgasbestandteile"
H.R. STALEY "Micrometrics of Lime", 28th Annual
Convention (1946) of the NLA
A. BACKMAN; Zement-Kalk-Gips 9 (1956), S. 262-275
H. VON ZANDER, Zement-Kalk-Gips 11 (1958), S. 41-45

(73) Patentinhaber: **Rheinische Kalksteinwerke GmbH.,
Wilhelmstrasse 77, D-5603 Wülfrath (DE)**

(72) Erfinder: **Bestek, Heinz, Am Sonnenhang 15,
D-5620 Velbert (DE)**
Erfinder: **Ewald, Werner, Memelerstrasse 25,
D-5603 Wülfrath (DE)**
Erfinder: **Hennecke, Hans-Peter, Schopstreck 43,
D-5600 Wuppertal (DE)**
Erfinder: **Roeder, Alfred, Dr., Falkstrasse 112,
D-4100 Duisburg (DE)**
Erfinder: **Schmitz, Friedrich, Dr., Zur Hotzepar 7,
D-5603 Wülfrath (DE)**

## Beschreibung

Die Erfindung betrifft ein Verfahren zur Herstellung von trockenem Kalziumhydroxid durch Löschen von feinstückigem oder gemahlenem, weich gebranntem Kalk, wobei der Kalk mit einer Löschflüssigkeit, bestehend aus Wasser und einem reaktionsverzögernden organischen Lösungsmittel intensiv und homogen vermischt wird.

Obwohl die Prozesse des Kalkbrennens und Kalklöschens schon sehr lange bekannt sind und in grossem Umfang betrieben werden, sind die zugrundeliegenden Mechanismen in allen Einzelheiten noch nicht vollständig geklärt. Es ist bekannt, dass die Geschwindigkeit des Löschvorganges vor allem von der Beschaffenheit des Branntkalkes abhängt.

Einerseits führt ein zunehmender Brenngrad wegen der Vergröberung der Kristallite und einer damit verbundenen Verkleinerung der spezifischen Oberfläche und der Porosität zu einer Verringerung der Löschgeschwindigkeit. In der Regel geht mit diesen Veränderungen auch eine unerwünschte Verkleinerung der spezifischen Oberfläche der bei der Trockenlöschung resultierenden Kalziumhydroxide parallel (Zement-Kalk-Gips 23 [1970], 519).

Andererseits führen niedrigere Brenntemperaturen entsprechend zu grösseren Löschgeschwindigkeiten und grösseren spezifischen Oberflächen. Die bei einer schneller ablaufenden Löschreaktion auftretenden höheren Temperaturen beschleunigen ihrerseits den Löschprozess noch mehr und können Anlass zu einer unerwünschten stärkeren Agglomeration der Primärteilchen sein.

Im technischen Prozess müssen die durch Agglomeration sich bildenden sogenannten Griesse von den erwünschten reaktionsfähigeren Produkten durch Siebung oder Sichtung abgetrennt werden.

Das in der gegenwärtigen Praxis anfallende Kalziumhydroxid ist das Ergebnis mehrerer sich überlagernder Reaktionen. A. Backman (Zement-Kalk-Gips 9 [1956], 262–275) hat dabei verschiedene aufeinanderfolgende Phasen unterschieden: die Wasseraufnahme, die Bildung eines Zwischenproduktes, die Umsetzung des Adduktes zum Hydroxid gemäss

$$CaO \cdot 2H_2O \rightarrow Ca(OH)_2 + H_2O + 64,8 \, kJ/mol$$

und zuletzt die Nachflockung oder Agglomeration zum Endprodukt. Bei diesem Reaktionsablauf durchläuft das Ausgangsgemisch von der anfänglich wässrigen Suspension eine Festphase, die letztlich unter Bildung eines feinteiligen Endproduktes zerfällt.

Ein solcher Verlauf der Löschreaktion lässt sich nur mit relativ hart gebranntem Kalk und besonders gut bei batchweiser Durchführung beobachten. Die einzelnen Phasenzeiten sind dabei schon sehr kurz und lassen sich bei grösseren Durchsätzen in grosstechnischen Apparaten nicht mehr trennen. Dies gilt insbesondere beim Einsatz der heutigen vornehmlich weich gebrannten Kalke, bei denen die Löschphasen praktisch gleichzeitig nebeneinander ablaufen und damit keine Möglichkeit der Beeinflussung bzw. Steuerung der Reaktion besteht, obwohl die grosstechnischen Anlagen mehrstufig ausgeführt sein können. Dies hängt auch damit zusammen, dass durch das verdampfende Wasser die Reaktion nicht gebremst, sondern beschleunigt wird.

In der Regel setzt bei Einsatz von besonders reaktionsfähigen Kalken in den bisher bekannten technischen Einrichtungen zur Kalklöschung die Hydratbildung schon ein, bevor das Löschwasser homogen eingemischt ist. Hieraus ergibt sich, dass die Temperaturentwicklung in der umzusetzenden Mischung aus Branntkalk und Wasser sehr ungleichmässig ist und an einzelnen Stellen den erwünschten Bereich weit überschreiten kann. Gleichzeitig führt die einsetzende Wasserdampfbildung zur ergebnisverschlechternden Dampflöschung, bei der reaktionsträgere Kalziumhydroxide gebildet werden. Eine Trennung der einzelnen Stufen und ihre optimale Durchführung ist trotz der «Mehrstufigkeit» von technischen Kalklöschanlagen nicht möglich, so dass hier die Vorteile einer exakten Reaktionsführung nicht ausgenutzt werden können. Das anfallende Rohhydrat enthält im Gegenteil beim Einsatz von weicher gebranntem Kalk sogar mehr grobes Abfallkorn, das heisst Griesse, als beim Einsatz von härter gebranntem Kalk, da die Löschreaktionen unkontrolliert und nicht steuerbar ablaufen.

Es ist weiterhin bekannt, dass man durch Zusatz von organischen Lösungsmitteln zum Löschwasser die Geschwindigkeit des Löschvorganges verzögern kann. Besonders geeignet sind Alkohole wie Methanol, Ethanol, Propanol, Butanol sowie Ketone, Äther und Aldehyde. Bisher sind auf diese Weise jedoch nur Präparate im Labormassstab hergestellt worden. Hierüber besteht nach Backman allgemein die Auffassung, dass ein Löschverfahren unter Zusatz von organischen Lösungsmitteln für eine technische Durchführung wegen des grossen Aufwandes nicht in Betracht kommt. Dementsprechend sind bisher auch keine Angaben bekannt, wie ein solches Verfahren zur technischen Nutzung ausgebildet sein kann.

Der Erfindung liegt die Aufgabe zugrunde, die einzelnen Reaktionsschritte bei der Trockenlöschung von Kalk durch zeitliche und räumliche Trennung so zu steuern, dass der Einsatz von reaktionsfähigen Kalken ohne starke Griessbildung auch grosstechnisch möglich wird und dabei ein Kalziumhydroxid mit besonders grosser spezifischer Oberfläche entsteht.

Die Aufgabe wird dadurch gelöst, dass das Vermischen von Löschflüssigkeit, bestehend aus 30 bis 50 Volumenteilen Wasser und 50 bis 70 Volumenteilen des organischen Lösungsmittels, mit dem Kalk bei einer Temperatur kleiner als 45°C in einem Mischgefäss (2) erfolgt, dass dann die Reaktionsmischung in ein Hauptreaktionsgefäss (4) überführt wird, wo sie mittels einer Heizeinrichtung auf eine Temperatur von 50 bis 70°C gebracht wird, und dass die Endreaktion in einem weiteren Reaktionsgefäss (5) stattfindet, wobei im Mischgefäss (2) das Verhältnis von Kalk zu Löschflüssigkeit so gewählt wird, dass in dem weiteren Reaktionsgefäss (5) eine Reaktionsendtemperatur von 85 bis 110°C erreicht wird. Die dabei erzielten Kalziumhydroxide haben eine spezifische Oberfläche von 35 bis 55 m²/g, die im Vergleich zu den üblicherweise erzeugten Kalziumhydroxiden mit 13 bis 19 m²/g um den Faktor 2 bis 3 grösser ist. Sie sind entsprechend reaktionsfähiger. Die Durchführung des Verfahrens in mehreren Reaktionsgefässen ermöglicht eine kontinuierliche Arbeitsweise.

Es ist vorteilhaft, wenn das Vermischen von Löschflüssigkeit mit dem Kalk bei einer Temperatur von kleiner als 30°C erfolgt.

Eine weitere vorteilhafte Ausbildung des Verfahrens besteht darin, dass das Aufheizen der Reaktionsmischung in einem dem Hauptreaktionsgefäss (4) vorgeschalteten Vorwärmer (3) erfolgt, der thermisch reaktionsschneller ist, und dass das Reaktionsgemisch im Hauptreaktionsgefäss (4) vor Überführung in das weitere Reaktionsgefäss (5) solange verbleibt, bis sich eine Temperatur von 70 bis 90°C eingestellt hat.

Es ist zweckmässig, dass das fertige Kalziumhydroxid in einem Kühler (7) auf Temperaturen kleiner als 50°C abgekühlt wird. Damit soll vermieden werden, dass das reaktionsfähige Kalziumhydroxid bei Lagerung unter erhöhter Temperatur sich verändert.

Eine zweckmässige Ausbildung des Verfahrens kann darin bestehen, dass das Reaktionsgemisch mit Hilfe eines Pflugscharmischers, Einfach- oder Doppelpaddelschneckenmischers oder Transportbandes durch das Hauptreaktionsgefäss (4) gefördert wird.

Im übrigen ist es zweckmässig, dass in einer Entgasungsstufe (6) von dem fertigen Kalziumhydroxid anhaftendes Lösungsmittel durch Anlegen eines Vakuums und/oder durch Spülen mit einem Inertgas entfernt wird, um Produktreinheit und kostengünstige Wiederverwendung von Lösungsmitteln sicherzustellen.

Nach dem erfindungsgemässen Verfahren erhält man ein feindisperses Kalziumhydroxid mit besonders hoher spezifischer Oberfläche und grosser reaktionsfähigkeit. Beim Einsatz von Feinkalken entstehen keinerlei Griesse, selbst dann nicht, wenn der Kalk überaus reaktionsfähig ist. Der Griesseanfall beträgt beim Einsatz von feinstückigem Branntkalk nur etwa ⅓ der Menge, die in sonst üblichen Löschanlagen entstehen.

Trockenes, reaktionsfähiges Kalziumhydroxid mit sehr grosser Oberfläche ist für die Entgiftung der Abgase insbesondere von Müllverbrennungsanlagen sehr gut geeignet, so dass die Bereitstellung solcher Produkte in technischem Umfang Bedeutung hat. Die in der Regel bei den üblichen Löschanlagen anfallenden Produkte sind hierfür weniger geeignet. Ihre spezifische Oberfläche ist in der Regel zu klein, so dass teilweise eine mehrfache überstöchiometrische Menge des Absorbens zur Bindung der Schadstoffe benötigt wird.

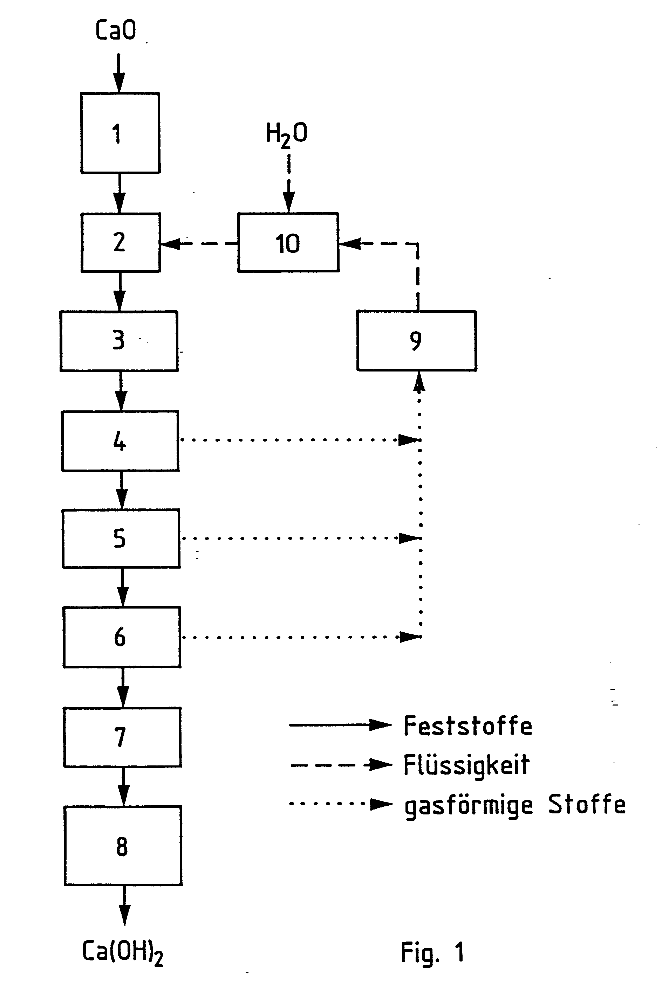

Fig. 1 zeigt das Fliessschema des Verfahrens.

Weissfeinkalk wird aus einem Vorratsbunker (1) zunächst in ein mit einem Intensivrührwerk ausgestattetes Mischgefäss (2) gegeben, das mit einer Kühleinrichtung versehen ist und in dem die Reaktionsflüssigkeit vorgelegt ist.

Die Reaktionsmischung wird nach ausreichender Homogenisierung über den Vorwärmer (3) in das Hauptreaktionsgefäss (4) gefördert, das beispielsweise als thermisch isolierter Doppelpaddelschneckenförderer ausgebildet ist. Das mit Einsetzen der Reaktion sich verfestigende Reaktionsgemisch wird hier aufgelockert und dann als grob zerkleinertes Material zur weiteren Ausreaktion in ein weiteres Reaktionsgefäss (5) gefördert.

In der Entgasungsstufe (6) wird von dem fertigen Kalziumhydroxid anhaftendes Lösungsmittel durch Anwendung von Vakuum und/oder Spülgas entfernt.

Nach Abkühlen des Kalziumhydroxids in einem Kühler (7) wird das Fertiggut in dem Vorratssilo (8) gelagert.

Die bei der Reaktion in den Reaktionsgefässen (2) bis (6) entstehenden organischen Dämpfe werden in einer nachgeschalteten Verfahrensstufe (9) kondensiert, in der unter Anwendung zum Beispiel eines Strahlwäschers und einer Kolonne die Rückgewinnung der organischen Phase erfolgt.

In einer weiteren Verfahrensstufe (10) wird das zurückgewonnene Kondensat mit der notwendigen Wassermenge zu der einzusetzenden Reaktionsflüssigkeit gemischt.

Das oben beschriebene Verfahren lässt sich auch dann durchführen, wenn man die Stufen (3), (4) und (5) in einem Reaktor ablaufen lässt und diesen mit einer Heizmöglichkeit versieht. Der Prozess muss dann zweckmässigerweise diskontinuierlich durchgeführt werden.

Die Erfindung wird anhand der folgenden Beispiele näher erläutert:

Vergleichsbeispiel
Weissfeinkalk
Reaktionsfähigkeit nach DIN 1060: $t_u = 2$ min
Menge: 28 kg
Temperatur: 20°C
Wasser
Menge: 17,1 l
Temperatur: 20°C
Lösungsmittel
Menge: –
Temperatur: –
Mischung Kalk/Löschflüssigkeit
Temperatur Vormischung: grösser 20°C
Temperatur nach Vorwärmen: entfällt
Temperatur nach Reaktion: 124°C
Fertiggut
Menge: 37 kg
Litergewicht: 360 g/l
spezifische Oberfläche: 16 m²/g

Beispiel 1
  Weissfeinkalk
Reaktionsfähigkeit nach DIN 1060: $t_u$=2 min
Menge: 28 kg
Temperatur: 20°C
  Wasser
Menge: 10,1 l
Temperatur: 20°C
  Lösungsmittel Methanol
Menge: 14,2 kg
Temperatur: 20°C
  Mischung Kalk/Löschflüssigkeit
Temperatur Vormischung: 25°C
Temperatur nach Vorwärmen: 59°C
Temperatur nach Reaktion:98°C
  Fertiggut
Menge: 37 kg
Litergewicht: 270 g/l
spezifische Oberfläche: 36 m2/g

Beispiel 2
  Weissfeinkalk
Reaktionsfähigkeit nach DIN 1060: $t_u$=2 min
Menge: 28 kg
Temperatur: 20°C
  Wasser
Menge: 10,1 l
Temperatur: 20°C
  Lösungsmittel Methanol
Menge: 15,2 kg
Temperatur: 20°C
  Mischung Kalk/Löschflüssigkeit
Temperatur Vormischung: 24°C
Temperatur nach Vorwärmen: 59°C
Temperatur nach Reaktion: 90°C
  Fertiggut
Menge: 37 kg
Litergewicht: 280 g/l
spezifische Oberfläche: 41 m2/g

Beispiel 3
  Weissfeinkalk
Reaktionsfähigkeit nach DIN 1060: $t_u$=2 min
Menge: 3,0 kg
Temperatur: 20°C
  Wasser
Menge: 1,4 l
Temperatur: 20°C
  Lösungsmittel 2-Methylpropanol-(2)
Menge: 2,9 l
Temperatur 20°C
  Mischung Kalk/Löschflüssigkeit
Temperatur Vormischung: 23°C
Temperatur nach Vorwärmen: 57°C
Temperatur nach Reaktion: 92°C
  Fertiggut
Menge: 4,0 kg
Litergewicht: 270 g/l
spezifische Oberfläche: 42 m2/g

Beispiel 4
  Weissfeinkalk
Reaktionsfähigkeit nach DIN 1060: $t_u$=1,1 min
Menge: 3,0 kg
Temperatur: 10°C
  Wasser
Menge: 1,1 l
Temperatur: 10°C
  Lösungsmittel Methanol
Menge: 2,1 l
Temperatur 10°C
  Mischung Kalk/Löschflüssigkeit
Temperatur Vormischung: 32°C
Temperatur nach Vorwärmen: 60°C
Temperatur nach Reaktion: 96°C
  Fertiggut
Menge: 4,0 kg
Litergewicht: 250 g/l
spezifische Oberfläche: 48 m2/g

**Patentansprüche**

1. Verfahren zur Herstellung von trockenem Kalziumhydroxid durch Löschen von feinstückigem oder gemahlenem, weich gebranntem Kalk, wobei der Kalk mit einer Löschflüssigkeit, bestehend aus Wasser und einem reaktionsverzögernden organischen Lösungsmittel intensiv und homogen vermischt wird, dadurch gekennzeichnet, dass das Vermischen von Löschflüssigkeit, bestehend aus 30 bis 50 Volumenteilen Wasser und 50 bis 70 Volumenteilen des organischen Lösungsmittels, mit dem Kalk bei einer Temperatur kleiner als 45°C in einem Mischgefäss (2) erfolgt, das dann die Reaktionsmischung in ein Hauptreaktionsgefäss (4) überführt wird, wo sie mittels einer Heizeinrichtung auf eine Temperatur von 50 bis 70°C gebracht wird, und dass die Endreaktion in einem weiteren Reaktionsgefäss (5) stattfindet, wobei im Mischgefäss (2) das Verhältnis von Kalk zu Löschflüssigkeit so gewählt wird, dass in dem weiteren Reaktionsgefäss (5) eine Reaktionsendtemperatur von 85 bis 110°C erreicht wird.

2. Verfahren nach Anspruch 1, dadurch gekennzeichnet, dass das Vermischen von Löschflüssigkeit mit dem Kalk bei einer Temperatur kleiner als 30°C erfolgt.

3. Verfahren nach Anspruch 1 und 2, dadurch gekennzeichnet, dass das Aufheizen der Reaktionsmischung in einem dem Hauptreaktionsgefäss (4) vorgeschalteten Vorwärmer (3) erfolgt.

4. Verfahren nach Anspruch 3, dadurch gekennzeichnet, dass das Reaktionsgemisch im Hauptreaktionsgefäss (4) vor Überführung in das weitere Reaktionsgefäss (5) solange verbleibt, bis sich eine Temperatur von 70 bis 90°C eingestellt hat.

5. Verfahren nach Anspruch 1 bis 4, dadurch gekennzeichnet, dass das fertige Kalziumhydroxid in einem Kühler (7) auf Temperaturen kleiner als 50°C abgekühlt wird.

6. Verfahren nach Anspruch 1 bis 5, dadurch gekennzeichnet, dass das Reaktionsgemisch mit Hilfe eines Pflugscharmischers, Einfach- oder Doppelpaddelschneckenmischers oder Transportbandes durch das Hauptreaktionsgefäss (4) gefördert wird.

7. Verfahren nach Anspruch 1 bis 6, dadurch gekennzeichnet, dass in einer Entgasungsstufe (6) von dem fertigen Kalziumhydroxid anhaftendes Lösungsmittel durch Anlegen eines Vakuums und/oder durch Spülen mit einem Inertgas entfernt wird.

## Revendications

1. Procédé de fabrication d'hydroxyde de calcium sec, obtenu par extinction de chaux calcinée faiblement, en petits morceaux ou broyée, la chaux étant mélangée de manière intense et homogène avec un liquide d'extinction, constitué d'eau et d'un liquide organique retardant la réaction, caractérisé en ce que le mélange de liquide d'extinction, constituée de 30 à 50 parties en volume d'eau et de 50 à 70 parties en volume du solvant organique, a lieu avec la chaux à une température inférieure à 45°C dans un récipient de mélange (2), en ce que le mélange réactionnel est alors transféré dans un réacteur principal (4), dans lequel il est porté, à l'aide d'un dispositif de chauffage, à une température de 50 à 70°C, et en ce que la réaction finale a lieu dans un autre réacteur (5), la proportion de chaux au liquide d'extinction étant choisie de telle façon dans le récipient de mélange (2), que dans le réacteur (5) on obtienne une température finale de 85 à 110°C.

2. Procédé selon la revendication 1, caractérisé en ce que le mélange du liquide d'extinction avec la chaux a lieu à une température inférieure à 30°C.

3. Procédé selon les revendications 1 et 2, caractérisé en ce que le chauffage du mélange réactionnel a lieu dans un préchauffeur (3) placé en amont du réacteur principal (4).

4. Procédé selon la revendication 3, caractérisé en ce que le mélange réactionnel reste dans le réacteur principal (4) avant passage dans l'autre réacteur (5) jusqu'à ce qu'une température de 70 à 90°C s'y établisse.

5. Procédé selon les revendications 1 à 4, caractérisé en ce que l'hydroxyde de calcium préparé est refroidi dans un refroidisseur (7) à des températures inférieures à 50°C.

6. Procédé selon les revendications 1 à 5, caractérisé en ce que le mélange réactionnel est transféré à l'aide d'un mélangeur à une ou deux vis ou une bande transporteuse dans le réacteur principal (4).

7. Procédé selon les revendications 1 à 6, caractérisé en ce que dans une étape de dégazage (6), le solvant adhérent est éliminé de l'hydroxyde calcium préparé par mise sous vide et/ou par balayage avec un gaz inerte.

## Claims

1. Process for producing dry calcium hydroxide by slaking fine-particled or ground lime which has been gently calcined, whereby the lime is mixed intensively and homogenously with a slaking liquid, comprising water and an organic reaction-impeding solvent, characterised in that the slaking liquid, comprising 30 to 50 parts-by-volume water and 50 to 70 parts-by-volume of the organic solvent, is mixed with the lime at a temperature below 45°C in a mixing vessel (2), in that the reaction mixture is subsequently transferred into a main reaction vessel (4), where it is heated to a temperature of 50 to 70°C using a heating device and in that the end reaction takes place in another reaction vessel (5), whereby the ratio of lime to slaking liquid in the mixing vessel (2) is selected so that an end reaction temperature of 85 to 110°C is achieved in the other reaction vessel (5).

2. Process according to Claim 1, characterised in that the slaking liquid is mixed with the lime at a temperature below 30°C.

3. Process according to Claims 1 and 2, characterised in that the reaction mixture is heated up in a preheater (3) which is connected to the main reaction vessel (4).

4. Process according to Claim 3, characterised in that the reaction mixture remains in the main reaction vessel (4) before it is transferred into the other reaction vessel (5), until a temperature of 70 to 90°C has been attained.

5. Process according to Claims 1 to 4, characterised in that the final calcium hydroxide is cooled in a cooler (7) to temperatures below 50°C.

6. Process according to Claims 1 to 5, characterised in that the reaction mixture is transported through the main reaction vessel (4) by means of a plough blade mixer, single or double paddle screw mixer or conveyor belt.

7. Process according to Claims 1 to 6, characterised in that in a degassing stage (6) solvent adhering to the final calcium hydroxide is removed by introducing a vacuum and/or by flushing with an inert gas.

CaO

1

H₂O

2 ← 10 ←

3        9

4 .......►

5 .......►

6 .......►

7

8

Ca(OH)₂

───────► Feststoffe

─ ─ ─► Flüssigkeit

·······► gasförmige Stoffe

Fig. 1